Europäisches Patentamt

European Patent Office

Office européen des brevets

(11) Publication number: **0 208 341**
**A1**

(12) **EUROPEAN PATENT APPLICATION**

(21) Application number: **86200394.4**

(22) Date of filing: **12.03.86**

(51) Int. Cl.4: **C09D 5/00** , **E01F 9/04** , **C08L 23/12** , **C08K 3/22**

The title of the invention has been amended (Guidelines for Examination in the EPO, A-III, 7.3).

(30) Priority: **15.03.85 IT 1992685**

(43) Date of publication of application:
**14.01.87 Bulletin 87/03**

(84) Designated Contracting States:
**AT BE CH DE FR GB IT LI LU NL SE**

(71) Applicant: **Dallamano, Giovanni**
**Via Matteotti 1**
**I-46043 Castiglione delle Stiviere(IT)**
Applicant: **Fiorentini, Antonio**
**Via Osma 2**
**I-20151 Milano(IT)**

(72) Inventor: **Fiorentini, Antonio**
**Via Osma 2**
**I-20151 Milan(IT)**

(74) Representative: **Appoloni, Romano et al**
**ING. BARZANO' & ZANARDO MILANO S.p.A.**
**Via Borgonuovo 10**
**I-20121 Milano(IT)**

(54) **Road marking compositions.**

(57) The invention relates to a thermoplastic composition suitable to be applied on road blankets to traffic signalling purposes, characterized in that it comprises a mixture containing a pigment selected from: calcium oxide or magnesium oxide, or a mixture thereof; and a polymer selected among: polypropylene, aliphatic hydrocarbon resins.

EP 0 208 341 A1

## "THERMOPLASTIC COMPOSITION SUITABLE TO BE APPLIED ON ROAD BLANKETS FOR TRAFFIC SIGNALLING PURPOSES"

Providing is known the blankets of roads and motorways with longitudinal and transversal ground traffic signals by means of white and yellow paints, as resistant as possible to the wear by the traffic. Such signals can be accomplished by means of different materials, which can be classified into three types: a first type comprising:

Painting products constituted by an organic carrier dissolved in solvent, able to supply cohesive forces suitable to keep aggregated pigments and fillers; a second type comprising:

Solventless painting products contituted by organic binders able to supply cohesive forces to pigments and fillers, and characterized by being extremely fluid at high temperatures and substantially consistent at use temperatures, i.e., within the range of from -10 to +60 °C.

Such products, generally denominated "thermoplastics", allow, when they are heated at high temperature: 170 -230°C, applications on road blankets of the kind of solvent containing paints. Finally, a third type is constituted by:

Prefabricated products in form of tapes and sheets, possibly cut into letter shapes, which are anchored onto the ground by means of adhesives or mastics.

In the actual practice, products of the above mentioned second and third type are formulated by first of all formulating the binding organic material which is constituted in general by a compound wherein resins, plastifiers, elastomers and plastomers are present.

To this compound pigments, reinforcing and roughening additives and fillers are added, to the purpose of obtaining the desired characteristics of colour, resistance to compression and to abrasion, etc.

In the preparation of such formulations, the prevailing criterion is the ratio between cost and performance. The elements determining an increase of costs are the resins and the pigments, whilst the fillers operate to the opposite direction, in any case allowing improvements in performance.

The commonly used pigments are titanium dioxide $TiO_2$, lead chromate $PbCrO_4$, cadmium sulphide CdS, which are characterized by having a high refractive index besides an absorbent power - (for non-white pigments) determining their colour.

The need for a refractive index high and anyway higher than 1,55 derives from the need, for the pigment particles, of maintaining a relative refractive index much greater than 1.00 also when they are embedded inside the organic binders, which generally have a refractive index comprised within the range of from 1.48 to 1.55. The relative refractive index, which is the ratio of the index of the pigment to that of the binder, is the parameter controlling the light diffusing power shown by the binder-pigment blend.

To exemplifying purposes, hereunder the refractive indexes are mentioned of some inorganic compounds:

Titanium dioxide (rutile)

$TiO_2$ 2.76

Cadmium sulphide

CdS 2.51

Magnesium oxide

MgO 1.74

Calcium oxide

CaO 1.84

Having the possibility of using MgO and CaO as the pigments for the use in question would be desirable, in that they have a good refractive index and are available at low cost.

Unfortunately, calcium oxide and magnesium oxide are compounds sensitive to water and to moisture and hence difficultly useable in painting blends suitable to the use in the field of signaletics for road blankets. The first, by absorbing water $H_2O$, turns into calcium hydroxide $Ca(OH)_2$, with a refractive index of 1.56, i.e., too low; the second one produced chalking effects.

Calcium oxide CaO and calcium hydroxide $Ca(OH)_2$ give a highly basic reaction producing phenomena of livering of blends.

Due to these drawbacks, the use of calcium oxide and of magnesium oxide as pigments for paints for road blankets has hence been never proposed, against such an use a technical prejudice having always been existed, due to the above mentioned reasons.

It has now been surprisingly found, and this is the object of the present invention, that on the contrary a use of these compounds in such a field is advantageously possible if they are formulated in a composition constituted by a blend with determined plastic resins, selected from the following ones: polypropylene, aliphatic hydrocarbon resins.

As for polypropylene, the use is preferred of atactic polypropylene. According to the invention, the blend of CaO, or of MgO, or of both of them, with said plastic resin in said composition can comprise further components such as plastifiers, reinforcing, roughening or other fillers, and other pigments.

In the preparation of such blends, in order to obtain the desired plasticity characteristics necessary for the subsequent uses, small amounts can be added of polyethylene waxes and of hydrocarbon resins, of prevailingly aliphatic nature, and diluents on mainly paraffinic base, with boiling point higher than 180°C.

The process for the preparation of the master batch comprises a mastication in closed (Banbury type) mixer, and can be either direct (plastomers-fillers) or reverse (i.e., fillers-plastomers). A processing on roll-mixer then follows, to the purpose of preparing sheets suitable to the subsequent operations.

Hereunder examples are supplied of master-batches according to the invention, of a white formulation and of a yellow formulation, prevailingly suitable to the hot spraying and to extrusion, and of a white and a yellow formulation, which is adapted to the manufacture of rollable sheets (with high content in PRA, atactic polypropylene).

EXAMPLES OF MASTER-BATCH

Example 1

Formulation to be used within 24 hours:
1) Atactic polypropylene PRA AT1 6.44%
2) Titanium dioxide rutile RS 66 33.51%
3) Calcium oxide 53.61%
4) Necires LX-801/100 6.44%

Example 2

Formulation to be used within 24 hours:
1) Atactic polypropylene PRA AT1 6.44%
2) Titanium dioxide rutile RS 66 6.71%
3) Calcium oxide 80.41%
4) Necires LX-801/100 6.44%

Example 3

Formulation without organic carrier, to be used within 24 hours:
3) Calcium oxide 48.48%
2) Titanium dioxide rutile RS 66 30.30%
4) Necires LX-801/100 21.21%

The product prepared according to the examples can be packed in drums, in cakes, or it can be flaked and packed inside polyethylene bags.

The product accomplished according to the examples is laid off on a metal cooling belt and is subsequently collected on a spool.

The blends according to the invention, besides maintaining the refractive index of the pigment preserving it from the hydratation, show other unexpected characteristics, i.e.:

-increase of the parameters of compression and impact strength;

-characteristics of self-hardening of the surface, by means of a probable process of carbonating of the particles of calcium oxide and calcium hydroxide at the surface, with the maintainment of the plasticity of the body of the stripe of traffic signalling character;

-self-cleaning power of the traffic signalling stripes produced with the product being the object of the present invention, characterized by a quick disappearing of the black signs left by the brakings;

-absence of cold flow, allowing the accomplishment of high-thickness signals (up to 15 mm), capable not to undergo the smearing effect of the traffic also in warm-climate Countries;

-decrease of low-temperature brittleness, allowing the use of the same product to be extended also in Countries characterized by harsh temperatures - (from 0 down to -10°C).

According to an important and advantageous aspect of the invention, such characteristics have resulted also when using as pigments MgO and CaO contained in easily available commercial products deriving from the calcination of calcium and magnesium carbonates.

The only required condition has been the absence of hydrated matter, a maximum tolerance having been established of 3%. This condition can be easily complied with, by purchasing freshly calcined material, in blocks corresponding to the sizes to be normally found on the market (3 -12 cm).

The experimental results relating to the mechanical-optical and chemical-physical characteristics of an end product of the invention have resulted practically independent from the mutual calcium oxide-magnesium oxide ratio (CaO/MgO) in the range tested, which has been of from CaO 97% -MgO 3% to CaO 20% -MgO 80%, the formulations with high content in calcium oxide CaO being slightly preferred for the white product, and the formulations with a certain amount of magnesium oxide MgO being slightly preferred for the yellow product.

The replacement capacity shown by the pigments calcium oxide CaO and magnesium oxide MgO, towards titanium dioxide $TiO_2$, has resulted comprised within the range of from 2:1 to 3:1, relatively to the mutual qualities, it being intended that from 2 to 3 part of CaO/MgO blend are necessary to replace one part of $TiO_2$.

Due to the high cost ratio between the use of titanium dioxide $TiO_2$ and that of calcined alkaline-earth carbonates, of about 15:1, the economic importance emerges of the invention.

It must be furthermore observed that the oxides used for the pigmentation, in lieu of titanium dioxide, are reconverted, during the wear process, into their respective carbonates, thus preventing risks of environmental alteration, such fact constituting a considerable advantage.

## Claims

1. Thermoplastic composition suitable to be applied on road blankets to traffic signalling purposes, characterized in that it comprises a blend containing a pigment selected from: calcium or magnesium oxide, or a mixture thereof; and at least a polymer selected among: polypropylene, aliphatic hydrocarbon resins.

2. Composition according to claim 1, characterized in that it comprises at least a component selected among the following ones: plastifier; reinforcing filler; roughening filler; further pigment.

3. Master-batch for the preparation of a composition according to claim 1, characterized in that it contains a pigment selected from: calcium oxide, magnesium oxide, or a mixture thereof; at least a polymer selected from: polypropylene; aliphatic hydrocarbon resins.

4. Composition and blend as hereinabove disclosed, in particular in the Examples.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 091 041 (CONSTRUCTEX LTD.) * Claims 1-10 * | 1 | C 09 D 5/00 E 01 F 9/04 C 08 L 23/12 C 08 K 3/22 |
| A | US-A-3 337 483 (C.E. SEARIGHT) * Claims 1-9 * | 1 | |
| A | FR-A-2 242 449 (ICI) * Claims 1,6 * | 1 | |
| A | US-A-3 935 158 (K. WATANABE) * Claim 1; column 2, line 50 - column 4, line 20 * | 1 | |

TECHNICAL FIELDS SEARCHED (Int. Cl.4)

C 09 D
E 01 F
C 08 L
C 08 K

The present search report has been drawn up for all claims

| Place of search | Date of completion of the search | Examiner |
|---|---|---|
| THE HAGUE | 07-08-1986 | GOOVAERTS R.E. |